(19) Europäisches Patentamt
European Patent Office
Office européen des brevets

(11) **EP 2 744 091 A1**

(12) **EUROPEAN PATENT APPLICATION**

(43) Date of publication:
**18.06.2014 Bulletin 2014/25**

(51) Int Cl.:
*H02M 3/07* (2006.01)         *H02M 1/36* (2007.01)
*H02M 1/32* (2007.01)         *H02M 1/44* (2007.01)

(21) Application number: **12197537.9**

(22) Date of filing: **17.12.2012**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME** | (72) Inventor: **Aerts, Steven**<br>**Redhill, Surrey RH1 1NY (GB)**<br><br>(74) Representative: **Crawford, Andrew et al**<br>**NXP SEMICONDUCTORS UK LTD**<br>**Intellectual Property & Licensing**<br>**Red Central** |
| (71) Applicant: **NXP B.V.**<br>**5656 AG Eindhoven (NL)** | **60 High Street**<br>**Redhill, Surrey RH1 1SH (GB)** |

(54) **Limitation of inrush- and input peak-currents in switched capacitor DC/DC converters**

(57)     The drive strength of a DC/DC converter is controlled, for example so that the peak current/power can be reduced. In one aspect, the invention enables the peak current to be limited so that in-rush currents can be reduced. In another aspect, the invention enables the peak current to be reduced when the converter is delivering a periodic load, by matching the converter switching to minimise peak currents but meet the periodic load demand.

FIG. 8

EP 2 744 091 A1

**Description**

This invention relates to DC/DC converters, and in particular relates to control of the output level of an integrated DC/DC converter:

A DC/DC converter typically comprises a switch mode power supply having a clock gating control loop. The converter is clocked when energy is required.

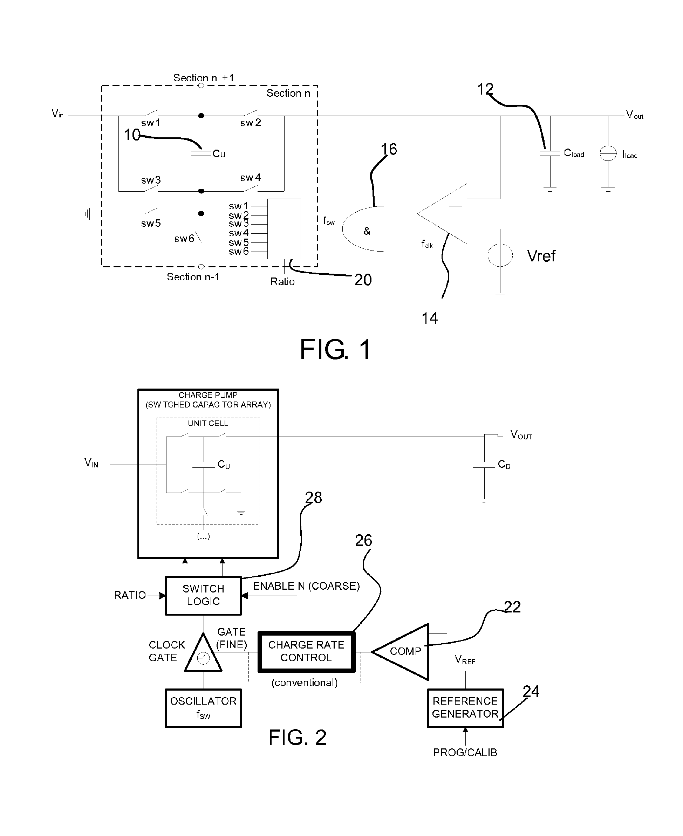

Figure 1 shows an example of the DC/DC converter circuit.

The circuit is supplied by a battery with voltage Vin. A set of switches sw1 to sw6 and a switching capacitor 10 form the core of the DC/DC converter, and generate an output voltage Vout.

The switches control the transfer of charge to and from the capacitor 10. The capacitor is charged using charge flow from the input Vin and discharges to an output capacitor 12 (Cload). In this way, a voltage change as well as voltage regulation can be implemented.

The output voltage Vout (or a voltage derived from it) is compared with a reference voltage Vref by comparator 14 which determines when the switches need to operate. The reference voltage can for example be generated by a bandgap reference circuit. The output voltage Vout can be scaled using a resistive divider for comparison with the bandgap reference voltage.

A clock signal fclk is passed to the switches of the DC/DC converter core (shown schematically in Figure 1) only when enabled by the comparator 14. The comparator output and the clock signal fclk are provided to an AND gate 16 to derive the clock gating signal fsw. This is used to control all of the switches to provide the desired configuration of the capacitor.

In the case of a battery supply driving a digital core, Vin=Vbat and Vout=Vcore.

The converter is operated in two phases, in which the switching capacitors are connected differently to or between the input voltage, the output voltage or ground. Various ratios can be implemented between the input and output by using capacitors in different configurations.

In a simplest implementation, the DC/DC converter can have a single capacitor (as in Figure 1) but it can instead have multiple capacitors to enable different ratios to be implemented.

A DC/DC converter can be configurable to different ratios by having a suitable capacitor and switch network, so that the switches can implement different capacitor configurations. The ratio can be 1 or less, so that the DC/DC converter is down-converting the battery voltage, or else charge pump DC/DC converters can also increase the voltage.

The capacitor in Figure 1 can be part of a single converter core, and many such cores can be provided, so that different numbers of cores can be switched into circuit to contorl the conversion ratio and/or the output current. Thus, the switched capacitor array (charge pump) is composed of a number of identical unit cells comprising a unit capacitor $C_U$ and a number switches. The switches of different unit cells can be activated according to a poly-phase interleaved schedule with switch logic that enables multiple (open-loop) conversion ratios to be realized.

Figure 2 shows some of the known control circuits for controlling the converter.

Each conversion ratio requires a specific number of unit cells to be involved. According to open-loop operation, conversion cycles are scheduled at a fixed conversion rate $f_{SW}$ determined by an oscillator circuit.

According to conventional closed-loop operation, the effective output voltage is regulated to match a configurable/trimmable target voltage setting. In a known system as shown in Figure 2, this can involve gating the conversion clock, such that conversion cycles are effectively skipped as long as the output voltage exceeds the target voltage setting. This is a cycle stealing approach, to provide pulse density modulation.

As shown in Figure 2, the output is compared using comparator 22 with a reference by provided by a reference generator 24. The comparison result is used to provide a gating signal ("Gate(fine)") to the clock signal, by means of a charge rate control circuit 26. This is a fine control which can skip individual clock pulses. The charge pump array is switched by switching logic 28 which receives the desired conversion ratio ("ratio") as input and also receives a coarse control signal from the charge rate control circuit 26.

In order to limit in-rush and peak load currents from the primary supply, the drive strength of the charge pumps (DC/DC converters) can be adjusted. Usually, a maximum drive strength is recommended to maintain a constant, regulated voltage. Hence much prior art relates to the voltage regulated operating region.

However, for application in battery operated devices, hearing instruments and implants in particular, peak currents from the primary (battery) supply must be minimized, which can be enabled by specific provisions for the current limited operating region. Peak currents from the battery supply translate into voltage variations at the battery output (as a result of the battery internal resistance) and this can have adverse effects on devices powered directly by the battery rather than by the output of the DC/DC converter. Batteries also have limitations in peak current delivery, particularly zinc-air batteries due to a so-called "oxygen starvation" effect.

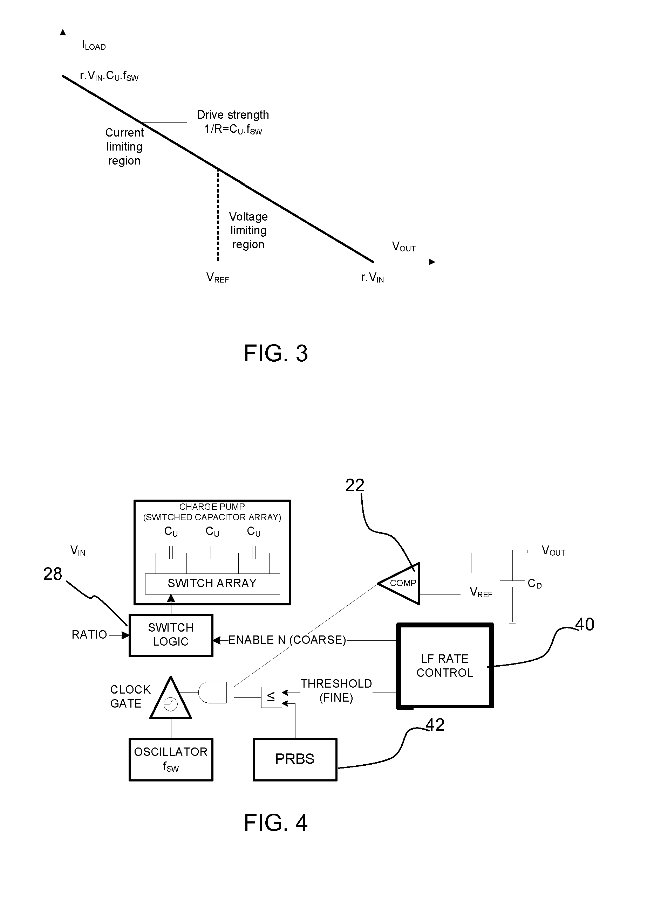

Figure 3 illustrates the ideal load line of a DC/DC converter with conversion ratio r, unit capacitance $C_U$ and conversion frequency $f_{SW}$. If voltage regulation is disabled or as long as the voltage is below target, the converter current is limited by the conductance (drive strength) $1/R = f_{SW}.C_U$, which is proportional to the conversion frequency and unit capacitance.

As a coarse drive strength control in the circuit of Figure 2, the switched capacitor array is designed with a larger amount of unit cells with (smaller) unit capacitance $C_U$. An adjustable number of unit cells N can then be enabled in parallel such that the effective unit capacitance and hence drive strength is adjustable.

As a fine drive strength control in the circuit of Figure 2, the effective conversion frequency is adjusted. According to the example shown this is achieved by gating the conversion clock, such that a configurable fraction of conversion cycles are skipped. This current-limiting control branch may further be combined with the voltage regulation control branch, such that both current and voltage limits can be enabled simultaneously and adjusted independently.

A problem with the known approaches is that due to secondary voltage ripple contraints in specific active modes, the impedance must be low. However, this leads to high peak (in-rush) currents at start up.

The invention provides an apparatus and method as defined in the claims.

According to the invention, there is provided a power supply circuit, comprising:

an input for receiving a power supply
a DC/DC converter for supplying a converted voltage to a load, wherein the DC/DC converter is controlled by a switch signal;
a reference clock generator;
a switching circuit for modifying the reference clock generator output before application to the DC/DC converter to provide control of the output voltage, by skipping clock cycles or by altering the reference clock frequency; and
a feedback path for controlling the switching circuit in response to changes in the converted voltage,
wherein the circuit further comprises a control circuit for controlling the reference clock modification over time such that the peak current drawn from the power supply is limited.

The control circuit provides adaptive reference clock modification, to provide DC/DC in-rush and peak current limiting. In particular, a trade-off is enabled between in-rush currents and startup time.

In a first example, the control circuit controls the reference clock modification so that a permitted degree of clock modification ramps up over time. This ramping can take place upon activation of the DC/DC converter itself to tolerate in-rush currents, or it may be upon activation of a peak load, for example an EEPROM program/erase cycle.

In this way, a change in converted voltage does result in high in-rush currents. Instead, the modification of the reference clock (which then controls the switching of the DC/DC converter) is made gradually over time.

The control circuit can comprise:

a divider for generating a DC/DC converter clock from the reference clock;
a pseudo random bit sequence generator and a counter which together control the divider.

The use of a pseudo random bit sequence (PRBS) generator reduces the lower frequency noise. By combining the PRBS with a counter, the amount by which the reference clock can be modified is ramped. The counter value and the pseudo random bit sequence value are added to provide the divider control input, and the counter can comprise a decrement counter which decrements between a maximum and minimum value at a predetermined rate.

This rate of decrement (which determines the rate at which the permitted clock modification is ramped) can be obtained by dividing the modified reference clock with a set value. In this way, the ramping rate is linked to the (modified) clock rate itself.

In another example, the control circuit is for monitoring the DC/DC converter output to detect if a target voltage has been reached within a predetermined time window, and for using the monitoring to change the reference clock modification.

This approach is based on controlling the reference clock modification in synchronism with known periodic behavior of the converter. For example, the predetermined time window can be a time window between known periodic peak current demands arising at the output.

The control circuit can then comprise a duty cycle measurement circuit for monitoring the times at which the DC/DC converter output provides the desired output, and altering the feedback path such that it settles at a setting near to the desired output just being reached within the time window.

The control circuit can again comprise a pseudo random bit sequence generator and a threshold level generator for controlling the reference clock modification. The threshold level is then used to change the reference clock modification.

The invention also provides a method of controlling a power supply circuit, comprising:

receiving a power supply;

supplying a converted voltage to a load using a DC/DC converter which is controlled by a switch signal;
generating a reference clock and modifying the reference clock output before application to the DC/DC converter to provide control of the output voltage, by skipping clock cycles or by altering the reference clock frequency; and controlling the reference clock modification over time such that the peak current drawn from the power supply is limited.

The method can be implemented primarily in software.

Examples of the invention will now be described with reference to the accompanying drawings, in which:

Figure 1 shows an example of a known DC/DC converter circuit;
Figure 2 shows known control circuits for controlling the converter;
Figure 3 shows the ideal load line of a DC/DC converter;
Figure 4 shows how DC/DC LF modulation noise can be spread by cycle dither;
Figure 5 shows a sigma delta converter used to generate the fine and course control signals;
Figure 6 shows an approach in which the converter clock frequency is gated from a higher clock frequency by an adaptively controlled divider ratio with dither;
Figure 7 shows the in-rush current and voltage of an ideal DC/DC converter;
Figure 8 shows a first circuit of the inveniton using adaptive ramp rate control of the clock signal;
Figure 9 shows a simulation of the behavior of the circuit of Figure 8;
Figure 10 shows a second circuit of the invention in which a digital clock manager (DCM) modifies the feedback signal; and
Figure 11 shows each cycle of the circuit of Figure 10 at peak load onset.

The invention relates to control of the drive strength of the DC/DC converter, for example so that the peak current/power can be reduced. In one aspect, the invention enables the peak current to be limited so that in-rush currents can be reduced. In another aspect, the invention enables the peak current to be reduced when the converter is delivering a periodic load, by matching the converter switching to minimise peak currents but meet the periodic load demand.

Various measures can be applied for drive strength control, and the invention relates to particular approaches, but which can be combined with others. Some control methods which can be combined with the approach of the invention will be outlined before the invention itself is described.

A first approach relates to the spreading of DC/DC LF modulation noise by cycle dither.

Figure 4 shows a high clock frequency rate control approach using a pseudo random generator (a pseudo random binary sequence "PRBS" implemented by a linear feedback shift register "LFSR") which advances at the switching frequency clock rate $f_{SW}$.

Figure 4 shows a low frequency control unit 40 which generates the coarse control signal for the switch logic and also generates the fine control signal ("Threshold (fine)"). This fine control signal is compared with an instantaneous pseudo random binary sequence (PBRS) value from a PBRS generator 42. By comparing the instantaneous PRBS value with a (fixed or low frequency controlled) threshold, a 1-bit gating signal is generated that is randomly/uniformly distributed with an average value proportional to the threshold.

If the PRBS counter was a linear counter, then comparing the counter value to a threshold value results in a 1-bit PWM modulated signal, the average value of which (i.e. the length of the 1 pulse) is proportional to the set threshold. For a PRBS counter, the output is a randomly distributed pulse density modulated signal.

The width of the PRBS sequence is typically chosen larger than the comparator width, e.g. a 24-bit PRBS and an 8-bit comparator. These parameters may vary depending on applications.

This use of a PBRS sequence is preferred over solutions that reduce the clock frequency (such as VCO or CCO) or skip cycles according to a duty cycle pattern (PWM), both of which will increase lower-frequency modulation noise.

The resulting signal is then combined with the output of the comparator 22 to generate the clock gating signal so that the clock cycles are skipped in a random pattern rather than as a repeating PWM cycle.

In this way, the approach of Figure 4 will uniformly spread the noise spectrum up to the HF harmonics, which is usually preferred. This example is a simplified noise shaper.

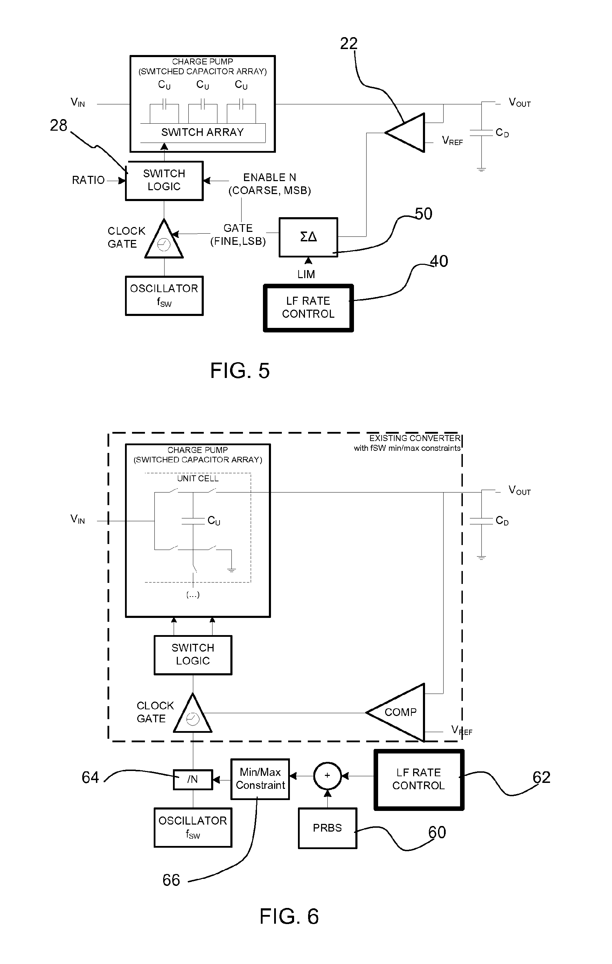

Figure 5 shows how a true noise shaper / sigma delta converter may be used to control the gating function, to provide high frequency rate control.

Figure 5 shows a sigma delta converter 50 used to generate the fine and course control signals. The low frequency rate control circuit 40 provides the limit value to the sigma delta converter. A first order sigma delta converter comprises a subtractor, an error integrator and a quantizer. The limiter value LIM is the value applied to a configurable limiter after the quantizer. The feedback signal is taken after the limiter such that its contributing error is integrated.

Voltage regulation may be achieved by a loop filter, whilst current limiting may be obtained by a saturating quantizer (a quantizer for dropping the lower bits in combination with a limiter for saturating above a limiter value) at the loop filter. This example has the advantage that low frequency modulation noise is reduced in both current and voltage operating regions, but is more expensive/complex to implement. With a multi-bit sigma-delta converter, the coarse control branch which controls the number of active unit cells may be controlled at high frequency in order to further enhance the noise spectrum spreading.

Due to technological limitations, it may not always be feasible to operate the DC/DC converter at high frequencies. This is in particular applicable for high-voltage (HV) charge pumps, such as required for generating the erase/program voltages for non-volatile memories, which require high voltage switches that are typically slower. In order to enable charge rate control still with reasonably low frequency modulation noise, the converter clock frequency can be gated from a higher clock frequency by an adaptively controlled divider ratio with dither.

This approach is shown in Figure 6 which provides high frequency rate control using divided dither. The divider ratio is constrained to be within limits as imposed by the converter's minimum/maximum clock frequencies.

Figure 6 shows a PBRS sequence generator 60, the output of which is combined with a low frequency rate control signal from the control unit 62. This combination is simply an addition, so that HF random noise is added to the LF control signal.

The resulting signal is used to control a divider 64 which converts the clock frequency fsw to a new value, but within lower and upper bounds, set by the maximum and minimum constraint unit 66.

The PRBS gain may be made configurable (by simply enabling/disabling a number of MSB's).The min/max constraint unit which is illustrated as a separate component may also be implied by the range of the sum of LF rate control and PRBS.

The three approaches above each provide HF rate control mechanisms for drive strength control, all with noise spreading advantages.

The approach which is the particular subject of this inveniton relates to DC/DC in-rush and peak current limiting by adaptive charge rate control.

In-rush currents are drawn from the primary ($V_{IN}$) supply during ramp-up of a secondary ($V_{OUT}$) supply predominantly due to charging of the decoupling capacitor $C_D$. Such in-rush currents are often orders of magnitude higher than normal operating currents, resulting in IR-drop and supply noise at the primary supply. For example the battery internal resistance causes voltage drops at the battery output in response to high current peaks. The battery may have an intrinsic output impedance which is too high to deliver the required peak currents. Especially for highly integrated low-power solutions, with multiple supply domains that can be (de)activated according to various power-saving modes, this leads to over-constrained primary supply load regulation requirements or power supply rejection requirements of components attached to the primary supply.

Therefore, for highly integrated low-power applications it is desirable that in-rush and other peak currents can be reduced.

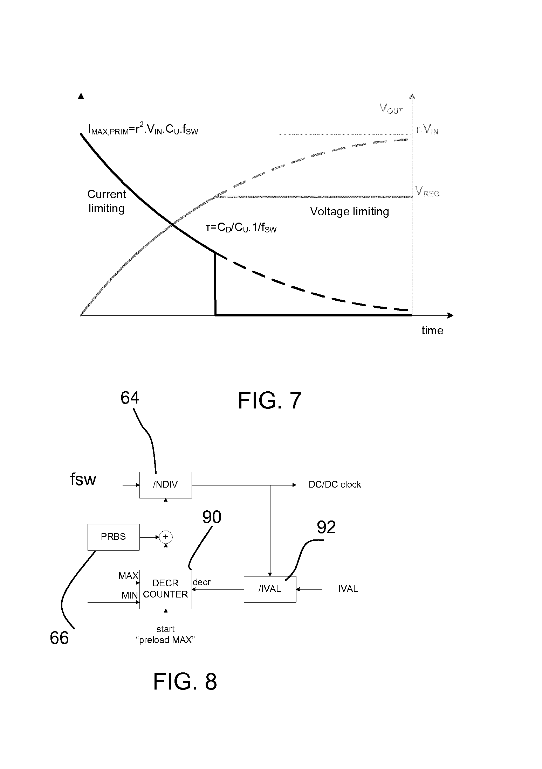

Figure 7 shows the in-rush current and voltage of an ideal DC/DC converter with unit capacitance $C_U$ at conversion rate $f_{SW}$ and conversion ratio r, loaded only by its decouple capacitor $C_D$.

The initial peak in-rush current drawn from the primary supply equals $r^2 \cdot V_{IN} \cdot C_U \cdot f_{SW}$. Assuming no additional external load, current decreases as the capacitor charges asymptotically towards $r \cdot V_{IN}$ with a time constant $\tau = C_D/C_U \cdot 1/f_{SW}$ until the target voltage has been reached.

For example, for a converter that is specified to maintain a maximum load current of 2mA with output voltage ripple less than 5% (100mV at 2V), at conversion ratio 2 requires a minimum drive strength of 100$\Omega$, peak in-rush current from the primary supply may reach $I_{MAX,PRIM} = 2^2 \cdot 1V/100\Omega = 40mA$.

In addition, converters must often be over-designed in order to maintain their target specifications over input/output supply ranges, with margins for unforeseen loads, various application scenarios, etc.

The drive strength limiting provisions as discussed above can be applied in order to limit these in-rush and other peak currents. Firstly, a general purpose power supply may be configured with an application (or application mode) specific predominantly static current limiting value, which is determined according to the expected maximum load and ripple requirements. These (coarse and fine) current limiting values, together with conversion ratio and target voltage setting may be configurable by a host interface and/or stored in a non-volatile memory. A combination of both non-volatile and run-time configuration is preferred such that initial start-up of the system (whereby the general purpose supply powers up the host) is enabled according to non-volatile default settings, whilst mode-specific settings (power saving modes) can be configured at runtime.

A first approach of the invention uses adaptive ramp rate control.

In-rush currents are characterized by a large initial peak current, which asymptotically decreases as the output voltage increases, as the amount of charge transferred in a single conversion cycle is proportional to the voltage difference dQ=C.dV.

According to an aspect of this invention, the drive strength can be adaptively increased (slowly ramped up with a low frequency) from a lower value to a higher value such that the initial peak current is effectively reduced.

Figure 8 shows a most basic implementation of the invention for application to the structure of Figure 6. As explained above, Figure 6 shows clock frequency control, which essentially provides frequency modulation.

The circuit of Figure 8 creates a modified clock signal which is then supplied to the logic switch through the clock gate.

It shows the divider unit 64 controlled both by a PBRS unit and a saturating decrement counter 90.

An input IVAL determines the decrement rate, so the slope of the linear ramp. The value IVAL is referenced to the variable DC/DC clock, and the ramp rate is only approximately linear. If it were referenced to fsw, it would be linear.

According to the most basic implementation shown in Figure 8, at ramp-up, the low frequency rate control value is implemented by a saturating counter, initialized with a maximum value and decremented by one at a fixed interval until it reaches its final minimum value.

In particular, Figure 8 shows a detailed implementation of a slowly ramping DC/DC clock. A high frequency clock fsw is divided by NDIV to provide a DC/DC clock with frequency fsw/NDIV. NDIV is not a fixed value, but adaptive from a maximum value MAX to a minimum value MIN such that the DC/DC clock is ramped from lowest frequency fsw/MAX to highest frequency fsw/MIN. This is achieved by giving a start pulse, upon which the MAX value is loaded in the decrement counter. Upon a decrement pulse "decr", the decrement counter decrements until it reaches the MIN value.

In the example shown, the "decr" pulse is generated at frequency fsw/NDIV/IVAL by dividing the DC/DC clock frequency by a value IVAL. It may also be generated directly from fsw by a larger divider.

It is known that a DC/DC converter may exhibit LF modulation of its input current in order to provide a required output current, which may not be desirable. In order to overcome this limitation, dither is added by the PRBS (which operates at the DC/DC clock frequency of fsw/NDIV).

Upon each DC/DC clock cycle, a new (pseudo) random value is added to the output of the decrement counter, thereby adding dither to NDIV.

The dimensioning of the counters, dividers, dither etc. is application-specific. For a high voltage DC/DC converter which is slow, the DC/DC may be required to operate in a range of 750kHz to 1.5MHz, and the available system clock frequency used as fsw may be 50MHz. With 2 bits for dither (i.e. between 0 and 3), MAX and MIN divider settings are respectively 63 (=66-3) and 33 (=33-0), and NDIV varies between 66 (=50MHz/750kHz) and 33 (=50MHz/1.5MHz).

The size of the PRBS is dimensioned at least to the size of the IVAL, such that it exhibits no limit cycles within the span of one NDIV value. Two arbitrarily chosen bits of the PRBS constitute the dither value. The IVAL divider is dimensioned such that the decrement counter decrements from MAX to MIN within the desired ramp time, which may be in the range of 500$\mu$s. Hence IVAL is chosen at approximately 17, (=500$\mu$s/30x1MHz, where 30=63-33 and 1MHz is the average DC/DC clock).

The values of MAX, MIN and IVAL are typically made configurable by register settings and the respective hardware counters are dimensioned to accommodate wider ranges of settings. The decrement counter may also be implemented by software.

The dither magnitude is also made configurable by AND-ing up to 4 arbitrarily chosen bits of the PRBS with a 4-bit register value, thereby accommodating dither magnitude of 15,7,3,1 or 0 (disabled). Note that the implementation relies on the fact that the start of the current ramp is known. For in-rush currents, this is whenever the DC/DC converter is started.

The effect of this modification to the circuit of Figure 6 is that the reference clock modification over time is controlled such that the peak current drawn from the power supply is limited.

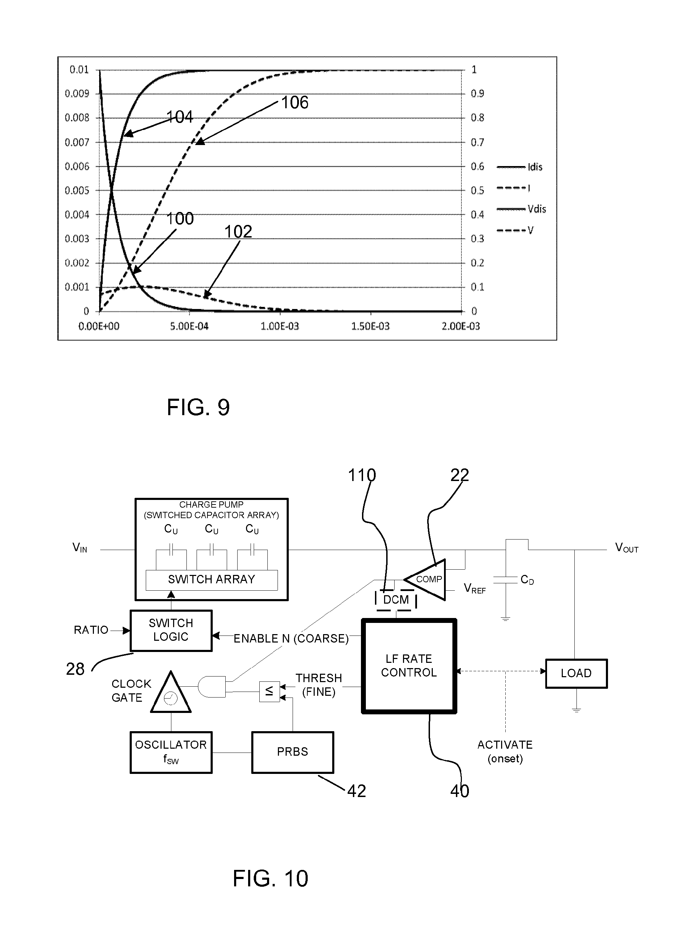

A simulation of the behavior is shown in Figure 9. A peak primary current 100 can be reduced by a factor 10 as shown in plot 102 whilst the supply voltage ramp time 104 is increased by a factor 3 as shown by plot 106.

The decrement value or interval may also be adjusted non-linearly in order to further optimize start-up time with a more constant charge current. Most optimally, the charge rate may be adaptively adjusted in response to a measurement of the instantaneous (input and) output voltage.

This low frequency rate control is applicable to both coarse and fine drive strength control according to any of the high frequency rate control methods described above. Figure 8 corresponds to the divider dither as depicted in Figure 6 simply by way of example.

According to this method, the final (operational) drive strength may be significantly higher to minimize ripple under expectable maximum load conditions, whilst maximum peak currents from the primary supply will not be significantly higher (or even lower) than operational current.

This approach is also applicable to minimize peak current under typical operating conditions, whilst maintaining margin (in terms of drive strength) for worst-case operating conditions. This is in particular very relevant for minimizing peak current of the high-voltage charge pumps used to generate the erase/programming voltage of a non-volatile memory. The drive strength required to ensure reliable high voltage generation under most extreme operating conditions (high temperature, low input supply voltage) and as the charge pumps and memory cells start to degrade as the device approaches end-of-life, is orders of magnitude higher than the typical drive strength required under nominal operating conditions.

Hence, each time the high voltage supplies are started for erasing/programming cells, the drive strength is adaptively increased from a lower value until its final maximum value. As such, the primary supply peak currents will be significantly reduced whilst the maximum drive strength is maintained to ensure reliable high voltage generation. Furthermore, it can be expected that the lifetime of the high voltage pumps is increased due to reduced peak currents.

In addition to inrush currents (charging the decouple capacitor), there may be other peak load currents (discharging the decouple capacitor) that are characterized by a low duty cycle, i.e. a large peak energy is required during a short time ($T_{PK}$), but is known (or managed) to occur at larger intervals ($T_{LOW}$) during which current demand is known to be significantly lower.

Two categories of such low duty cycle loads are periodic loads ($T_{LOW}$ predominantly constant), e.g. sniff mode of a wireless receiver/transceiver, and event-driven loads with minimum interval ($T_{LOW}$ never less than a set limit), e.g. the program/erase cycle of a non-volatile memory.

A sniff mode of a wireless transceiver is a low-power mode, according to which the receiver is activated shortly, at regular intervals. Such mode is relevant to enable 'wake up on air' (wireless activation), to remain synchronized in a Time Division Multiple Access (TDMA) network, or to maintain a low-rate communication channel (in a TDMA network).

The program/erase cycle of a (floating-gate type) non-volatile memory is also characterized by a certain cycle time, known as the erase/program time, during which the memory is locked for read/write access. A cycle is characterized by a ramp phase with large initial current peak, followed by a steady phase with significantly lower current demand.

If such low duty cycle loads are supplied by a DC/DC converter, if not limited by drive strength, any load variations will be drawn directly from the primary supply according to the conversion ratio $I_{PRIM}=r.I_{LOAD}$ (based on an ideal converter approximation), with the same duty cycle, which may not be desirable. Instead, it is desirable that peak energy will predominantly be sourced from the decouple capacitor $C_D$, whilst the decouple capacitor is only (slowly) charged with a much smaller current, which is enabled by any of the drive strength limiting provisions detailed above.

According to this method, the DC/DC converter output voltage will be characterized by ripple, as it slowly ramps up to its (maximum) target voltage Vmax, and at the event of a peak load with energy ΔE drops to a minimum voltage Vmin. With a known peak energy demand ΔE, the decoupling capacitor $C_D$ must then be sufficient such that voltage will not drop below the minimum required voltage, according to the formula (simplified assuming all energy is consumed in zero time $T_{PK} \approx 0$):

$$\Delta E = \frac{C_D \cdot V_{max}^2}{2} - \frac{C_D \cdot V_{min}^2}{2}$$

By means of coarse and fine drive strength provisions, the drive strength can be accurately adjusted such that the target voltage will approximately be reached (just) before a next peak load may occur. As such, the drive strength is optimally reduced and primary peak currents are optimally leveled.

Since the amount, duration and interval of peak loads may vary with environment conditions and manufacturing tolerances, care must be taken to safeguard the minimum supply voltage. If the drive strength is critically low, the target voltage will (just) *not* be reached before peak load onset, the voltage will drop lower at each load cycle and eventually break down.

If the margin required to compensate for these tolerances is too high, a control loop can be added to observe whether the target voltage was reached as shown in Figure 10.

Figure 10 shows a modification to Figure 4 in which a duty cycle measurement circuit (DCM) 110 monitors the feedback signal, thereby providing an indicator when/whether the target voltage has been reached. This is achieved by integrating the feedback signal over time. In a digital circuit, this is typically a signed saturating counter, counting up when the input is 1 until it reaches a maximum, and counting down when the input is 0 until it reaches minimum. The DCM output indicator may be just the sign bit of this counter, or hysteresis may be built in (e.g. indicator set when counter reaches +3 and reset when counter reaches -3; this may coincide with the saturation value of the counter).

The LF rate control circuit uses this indicator together with a timer. Whenever the target voltage is reached, the timer is reset. Whenever and as long as the voltage is not reached, the timer increments until it reaches a configurable timeout value. Upon timeout, the LF rate control increments the drive strength and resets the timer. A second timer, with (slightly) higher timeout value is used to decrement the drive strength upon timeout. This timer is reset whenever the first timer times out.

For periodic loads with deterministic periodic onset, the timers may be omitted. At periodic load onset, if the target voltage was reached (based on the DCM indicator), the LF rate control decrements the drive strength, otherwise it increments the drive strength.

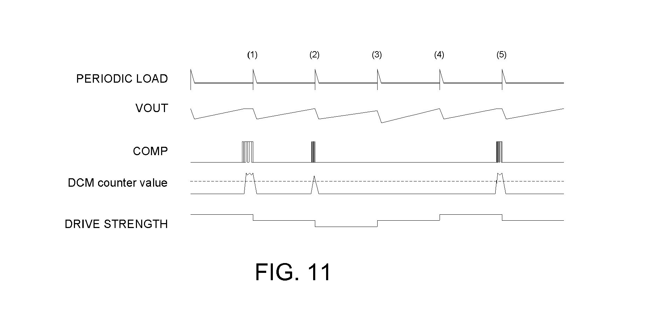

Figure 11 illustrates the effect for periodic peak loads; COMP is the feedback signal which is integrated over time to produce the "DCM counter value". The DCM output indicator corresponds to values being above/below the dotted line. The drive strength either increments or decrements periodically, depending on the indicator value. Most of the time, the DC/DC converter operates in drive strength limited mode (that is as long as COMP is 0), and the primary current is mostly static and proportional to the drive strength and the *average* load current.

Whenever the target voltage is reached, the DC/DC converter operates is voltage limited mode and draws less current. The LF control loop ensures that drive strength is adjusted such that the target voltage will approximately just be reached by the time a new peak load current is required.

The effect is that the input current of the DC/DC converter is proportional to the average load (output) current, and peak load currents are thereby smoothened out. However as also illustrated the voltage ripple (VOUT) is increased as explained before.

Again, the effect of this modification to the circuit of Figure 4 is that the reference clock modification over time is controlled such that the peak current drawn from the power supply is limited.

Instead of a Duty Cycle Measurement (DCM) component, an additional analog comparator with hysteresis or slightly lower reference can be used.

In Figure 11, when the voltage has been reached, the DC/DC converter is operating in voltage regulation mode, observable by the comparator toggling, filtered by the DCM counter, which is above threshold.

The phases in Figure 11 (for each cycle at peak load onset) are:

(1) The target voltage was reached, the DC/DC converter reached the voltage regulation mode, observable by the comparator toggling, filtered by the DCM counter, which is above threshold. In this case, the drive strength can be reduced for the next phase, because the target voltage was reached too early. Thereby, the primary current will also slightly descrease.

(2) The target voltage was (just) reached. This is clear from the smaller number of comparator cycles, and the smaller DCM count value. The drive strength is again reduced. In this case, the drive strength becomes critically low.

(3) The target voltage was not reached as a result of the critically low drive strength. The fact that the target voltage is not reached is clear from the lack of comparator switching. The drive strength thus needs to be increased.

(4) The target voltage was (just) not reached, drive strength is increased.

(5) The target voltage was reached, the drive strength is reduced.

Thus, the control loop settles near a point of minimum drive strength to just accommodate the load current whilst maintaining a desired voltage with acceptable ripple. This drive strength, and hence also input current of the DC/DC converter, is proportional to the *average* load current. The voltage ripple is however proportional to the *peak* load current.

The control loop must be agile to compensate for temporal peak load variations. Margin may be added by increasing the DCM counter threshold, or by requiring that it is reached earlier (e.g. at 90% of $T_{LOW}$).

If the load is not intrinsically periodic, but load onset (activity) can be controlled, the control loop can be reversed: if a load activity is to be scheduled, it is deferred until the target voltage has been reached. The drive strength then determines the maximum activity latency and periodicity. One step further, if activities can be queued, the drive strength can be adjusted according to queue filling, such that drive strength is optimized towards expected load conditions.

The invention has been described in detail based on two approaches using a PRBS for reducing noise. However, the concepts of the invention can be applied to other feedback control mechanisms for DC/DC converters.

The invention can be implemented primarily as an algorithm. A voltage comparator is used and a reference clock generator is required, but some or all of the other blocks in the control system can be implemented in software. Thus, the invention has been described making reference to physical circuit blocks, but this is only for clarity of the description, and many of these blocks may be implemented as an algorithm, in particular the LF rate control unit may be a software module or a hardware circuit configurable by software.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

**Claims**

1. A power supply circuit, comprising:

   an input for receiving a power supply (Vin);
   a DC/DC converter for supplying a converted voltage to a load, wherein the DC/DC converter is controlled by a switch signal;
   a reference clock generator;
   a switching circuit (28) for modifying the reference clock generator output before application to the DC/DC converter to provide control of the output voltage, by skipping clock cycles or by altering the reference clock frequency; and
   a feedback path (22) for controlling the switching circuit in response to changes in the converted voltage, wherein the circuit further comprises a control circuit (40) for controlling the reference clock modification over time such that the peak current drawn from the power supply is limited.

2. A circuit as claimed in claim 1, wherein the control circuit (40) controls the reference clock modification so that a permitted degree of clock modification ramps up over time.

3. A circuit as claimed in claim 2, wherein the control circuit comprises:

   a divider (64) for generating a DC/DC converter clock from the reference clock;
   a pseudo random bit sequence generator (66) and a counter (90) which together control the divider (64).

4. A circuit as claimed in claim 3, wherein the counter value and the pseudo random bit sequence value are added to provide the divider control input, and wherein the counter (90) comprises a decrement counter which decrements between a maximum and minimum value at a predetermined rate.

5. A circuit as claimed in claim 4, wherein the predetermined rate is obtained by dividing the modified reference clock with a set value.

6. A circuit as claimed in claim 1, wherein the control circuit (40, 110) is for monitoring the DC/DC converter output to detect if a target voltage has been reached within a predetermined time window, and for using the monitoring to change the reference clock modification.

7. A circuit as claimed in claim 6, wherein the predetermined time window is a time window between known periodic peak current demands arising at the output.

8. A circuit as claimed in claim 7, wherein the control circuit comprises a circuit (110) for monitoring the times at which the DC/DC converter output provides the desired output, and altering the feedback path such that it settles at a setting near to the desired output just being reached within the time window.

9. A circuit as claimed in any one of claims 6 to 8, wherein the control circuit comprises:

   a pseudo random bit sequence generator (42) and a threshold level generator for controlling the reference clock modification.

10. A circuit as claimed in claim 9, wherein the feedback path is altered to change the reference clock modification by adjusting the threshold level.

11. A method of controlling a power supply circuit, comprising:

    receiving a power supply (Vin);
    supplying a converted voltage to a load using a DC/DC converter which is controlled by a switch signal;
    generating a reference clock (fsw) and modifying the reference clock output before application to the DC/DC converter to provide control of the output voltage, by skipping clock cycles or by altering the reference clock frequency; and
    controlling the reference clock modification over time such that the peak current drawn from the power supply is limited.

**12.** A method as claimed in claim 11, comprising controlling the reference clock modification so that the permitted degree of clock modification ramps up over time.

**13.** A method as claimed in claim 11, comprising monitoring the DC/DC converter output to detect if a target voltage has been reached within a predetermined time window, and using the monitoring to change the reference clock modification.

**14.** A method as claimed in claim 13, wherein the predetermined time window is a time window between known periodic peak current demands arising at the output.

**15.** A computer program comprising computer program code means adapted to perform all the steps of any of claims 11 to 14 when said program is run on a processor.

Section n + 1

Section n

$V_{in}$

sw 1

10

sw 3

sw 5

sw 2

Cu

sw 4

sw 6

sw 1
sw 2
sw 3
sw 4
sw 5
sw 6

Section n-1

Ratio

20

$f_{sw}$

16

&

$f_{clk}$

12

14

$C_{load}$

$I_{load}$

$V_{out}$

Vref

## FIG. 1

CHARGE PUMP
(SWITCHED CAPACITOR ARRAY)

UNIT CELL

$V_{IN}$

$C_U$

(...)

$V_{OUT}$

$C_D$

RATIO

SWITCH
LOGIC

28

ENABLE N (COARSE)

26

CLOCK
GATE

GATE
(FINE)

CHARGE RATE
CONTROL

(conventional)

COMP

22

$V_{REF}$

OSCILLATOR
$f_{SW}$

REFERENCE
GENERATOR

24

PROG/CALIB

## FIG. 2

FIG. 3

FIG. 4

**FIG. 5**

**FIG. 6**

$I_{MAX,PRIM}=r^2.V_{IN}.C_U.f_{SW}$

$V_{OUT}$

$r.V_{IN}$

Current
limiting

$V_{REG}$

Voltage limiting

$\tau=C_D/C_U.1/f_{SW}$

time

FIG. 7

64

fsw

/NDIV

DC/DC clock

90

PRBS

92

MAX
MIN

DECR
COUNTER

decr

/IVAL

IVAL

66

start
"preload MAX"

FIG. 8

FIG. 9

FIG. 10

FIG. 11

Europäisches
Patentamt

European
Patent Office

Office européen
des brevets

**EUROPEAN SEARCH REPORT**

Application Number

EP 12 19 7537

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2011/084742 A1 (JURASEK RYAN ANDREW [US]) 14 April 2011 (2011-04-14)<br>* figures 2,3 *<br>* paragraphs [0004], [0005], [0008], [0014] - [0021] *<br>----- | 1,2,6,<br>11-13,15<br>3-5,9,10<br>7,8,14 | INV.<br>H02M3/07<br>H02M1/36<br>H02M1/32<br><br>ADD.<br>H02M1/44 |
| Y | US 2012/049903 A1 (OH WONSEOK [US] ET AL) 1 March 2012 (2012-03-01)<br>* abstract; figure 3 *<br>* paragraphs [0007], [0019], [0020], [0021], [0023], [0028], [0033] *<br>----- | 3-5,9,10 | |
| X | US 2006/250177 A1 (THORP TYLER J [US] ET AL) 9 November 2006 (2006-11-09)<br>* figure 5 *<br>* paragraphs [0003], [0009], [0020], [0021], [0041], [0044], [0045] *<br>----- | 1,11,15 | |
| A | US 6 249 445 B1 (SUGASAWA YASUO [JP]) 19 June 2001 (2001-06-19)<br>* figure 12 *<br>----- | 3-5 | |

TECHNICAL FIELDS
SEARCHED (IPC)

H02M

The present search report has been drawn up for all claims

| Place of search | Date of completion of the search | Examiner |
|---|---|---|
| The Hague | 14 May 2013 | Kail, Maximilian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 19 7537

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2013

| Patent document cited in search report | | Publication date | Patent family member(s) | | Publication date |
|---|---|---|---|---|---|
| US 2011084742 | A1 | 14-04-2011 | CN 102044962 A | | 04-05-2011 |
| | | | DE 102009057554 A1 | | 14-04-2011 |
| | | | JP 5091936 B2 | | 05-12-2012 |
| | | | JP 2011087451 A | | 28-04-2011 |
| | | | TW 201113660 A | | 16-04-2011 |
| | | | US 2011084742 A1 | | 14-04-2011 |
| US 2012049903 | A1 | 01-03-2012 | NONE | | |
| US 2006250177 | A1 | 09-11-2006 | US 2006250177 A1 | | 09-11-2006 |
| | | | WO 2006121524 A1 | | 16-11-2006 |
| US 6249445 | B1 | 19-06-2001 | JP 2000236657 A | | 29-08-2000 |
| | | | KR 20010006626 A | | 26-01-2001 |
| | | | US 6249445 B1 | | 19-06-2001 |

EPO FORM P0459

For more details about this annex : see Official Journal of the European Patent Office, No. 12/82